Europäisches Patentamt

European Patent Office

Office européen des brevets

(11) Publication number: **0 030 448**
**B1**

## EUROPEAN PATENT SPECIFICATION

(45) Date of publication of patent specification: **10.04.85**

(51) Int. Cl.⁴: **A 23 L 1/30, A 23 L 1/31**

(21) Application number: **80304345.4**

(22) Date of filing: **03.12.80**

(54) A method for making a stabilized sulfur-containing amino acid fortified foodstuff.

(30) Priority: **06.12.79 US 101026**

(43) Date of publication of application:
**17.06.81 Bulletin 81/24**

(45) Publication of the grant of the patent:
**10.04.85 Bulletin 85/15**

(84) Designated Contracting States:
**BE DE FR GB IT NL**

(56) References cited:
**DE-A-2 653 987**
**DE-A-2 654 820**
**FR-A-2 380 743**
**US-A-3 878 305**
**US-A-3 952 115**

(73) Proprietor: **THE PROCTER & GAMBLE COMPANY**
**301 East Sixth Street**
**Cincinnati Ohio 45202 (US)**

(72) Inventor: **Wooton, James Charles**
**8740 Cavalier Drive**
**Cincinnati Ohio 45231 (US)**
Inventor: **Mohlenkamp, Marvin Joseph, Jr.**
**9113 Zoellner Road**
**Cincinnati Ohio 45239 (US)**
Inventor: **Damico, Robert Anthony**
**655 N. Meadowcrest Cir.**
**Cincinnati Ohio 45231 (US)**
Inventor: **McCoy, Stephen Allen**
**2440 Cecelia Drive**
**Villa Hills, KY 41016 (US)**

(74) Representative: **Brooks, Maxim Courtney et al**
**Procter & Gamble (NTC) Limited Whitley Road**
**Longbenton**
**Newcastle-upon-Tyne NE12 9TS (GB)**

Courier Press, Leamington Spa, England.

# 0 030 448

**Description**

This invention relates to a method for making a foodstuff fortified with a nutritionally useful, sulfur-containing amino acid.

There is considerable impetus to satisfy the protein requirement in the diet of man with protein derived exclusively from vegetable sources. There are essentially two reasons which compel human populations to look to vegetable proteins for a substantial, if not an exclusive, source of dietary protein. The paramount reason is one of efficiency. That is, at least in certain parts of the world, it is no longer feasible, from the standpoint of consumption of energy, to grow a crop to feed livestock to obtain required dietary protein. The second reason is best couched in terms of nutrition and health. Manufactured foodstuffs based on vegetable proteins afford the possibility of ultimately achieving a perfect balance of nutrients with controlled exclusion of certain identified detrimental agents, such as cholesterol. And, there are subsidiary reasons involving the factor of convenience, and, to some, reasons of personal conviction.

There appears to be no question as to the capacity to obtain vegetable proteins in sufficient quantity. Success in the agriculture of, for example, the legumes (and in particular soy) have assured the ready procurement of vegetable protein in quantity. And this assurance of quantity is, in part, attributable to the development of associated technologies to exploit and make available this source of native vegetable protein.

Now the principal concern is one of quality of that vegetable protein. If the vegetable protein is not nutritionally the equivalent of protein derived from animal sources, that is, of comparable quality, the fact that the vegetable protein is obtainable in quantity is of lessened significance. The fact is that proteins derived from a chosen plant species source are not of comparable nutritional quality to animal sources. This is evident, in part, by examination of the amino acid content, or profile, of a chosen plant protein.

Fortification of proteinaceous foodstuffs with, e.g. sulfur-containing amino acids, and particularly with respect to methionine, has typically involved direct addition of DL-methionine as the free acid. However, attempts to fortify methionine deficient foodstuffs with free DL-methionine proved unfeasible because of a severely intractable flavor problem. It was discovered that foodstuffs so fortified with DL-methionine developed off-flavors and became discolored. This effect was particularly noticeable for foodstuffs that were either heated prior to eating, or were stored for an indefinite period in a hydrated condition, but the effect was also noticed after dry storage.

The chemical basis for the generation of these off-flavors and unsightly discolorations was, in part, attributable to the well-known Strecker degradation or more commonly, the Maillard reaction (chemical browning). The Maillard reaction is particularly distressing when sulfur-containing amino acids are involved because of the generation and liberation of noxious mercaptans and sulfides, e.g. methional is freely formed in foodstuffs fortified with methionine. Also, distinct from the Maillard reaction, degradative reactions, such as those involving these sulfur-containing amino acids, adversely affect flavor. Needless to say, alternate means were sought to alleviate the sulfur amino acid deficiencies in vegetable derived proteins.

Some prior art methods are designed to defeat the Maillard reaction in the face of free addition of selected amino acids. Representative diverse means suggested by the prior art are: (1) encapsulation of the free amino acid; (2) simultaneous incorporation of certain alleged anti-browning agents, e.g. pyrocarbonic acid esters, and O-carboxy anhydrides of α-anhydroxy acids (U.S. Patent 3,337,348 granted Aug. 22, 1967); and (3) utilization of the plastein reaction. This last-mentioned means involves the bonding of the added amino acid by peptide linkage to protein molecules which constitute the bulk of the proteinaceous component of the foodstuff. All of the above-listed means are of limited practical utility. Consequently, the prior art continued the search for means in circumvention of the Maillard reaction. Among these means were suggested the utilization of less tasteful derivatives of certain amino acids which were relatively inert to degradation yet nutritionally available on ingestion.

For example, some success has been achieved in derivatization of certain sulfur-containing amino acids, especially methionine. For example, Ralph Anthony Damico and Robert Wayne Boggs in U.S. Patent 3,878,305, April 15, 1975, discovered that certain N-acyl L-methionine (NALM) compounds, exhibit increased stability, attenuated taste characteristics and are nutritionally available. Damico and Boggs in U.S. Patent 3,952,115 achieved additional successes on ester derivations of N-acyl L-methionine.

Patent publications DE—A—2 653 987 and EP—A—0 022 361 relate to various amino acids and means for fortifying foodstuffs therewith.

NALM and its derivatives were developed to deliver the essential nutrient, methionine, in a more stable and palatable form. Although NALM is considerably more stable than methionine, NALM related off flavors have been detected in aged meat analogs and peanut butters.

It is an object of the present invention to reduce or eliminate the undesirable off-flavors and the instability of NALM and similar sulfur-containing amino acid food additives in certain types of food compositions.

This and other objects will become apparent in the light of this disclosure.

Summary of the invention

Better tasting and more stable NALM and related sulfur-containing amino acid fortified foodstuffs are

0 030 448

provided. Improved sulfur-containing amino acid fortified foodstuffs, comprising: an intimate mixture of a sulfur-containing amino acid and a shelf stable, sulfur-containing amino acid-compatible edible material are disclosed. N-acetyl L-methionine (NALM) suspended in a fat or oil and said suspension applied to the surface of dry, texturized meat analog granules are two shelf-stable examples of the invention. The invention provides improved shelf-stable sulfur-containing amino acid fortified foodstuffs, preferably by selective treatment (mixing, suspending, dispersing, coating and/or encapsulating) of the sulfur-containing amino acid and/or any foodstuff material containing an amino acid incompatible component. The amino acid is treated with a shelf-stable, sulfur-containing amino acid-compatible edible material, before mixing the sulfur-containing amino acid with any incompatible foodstuff material containing a "destabilizer compound". The method comprises chemically inactivating potential destabilizing reactions in said fortified foodstuffs by separation.

Detailed description of the invention
A detailed description of the invention is conveniently presented by discussion of two interrelated topics: (A) identification and preparation of preferred sulfur-containing amino acid additives and preferred fortified foodstuffs; and (B) the significance of a more stable and better-tasting improved NALM fortified foodstuff.

Identification and preparation of the stable improved NALM fortified foodstuffs
It was surprisingly discovered that sulfur-containing amino acids and certain edible materials when intimately mixed are compatible and stable upon shelf storage while others were not.
A preferred embodiment of the present invention is a sulfur-containing amino acid suspended or dispersed in a liquid or softened plastic fat or oil. Such a suspension or dispersion can be spread over the surfaces of foodstuffs, e.g. certain mean analog granules, which contain what is referred to herein as a "foodstuff containing a sulfur-containing amino acid destabilizer" or as a "foodstuff containing a sulfur-containing amino acid incompatible component". A "destabilizer" is a component which reacts with the sulfur-containing amino acid to generate volatile sulfur compounds.
A key principle of the present invention is selective mixing and protection of the sulfur-containing amino acid from destabilizer components.
Foodstuffs and edible materials which do not contain a "destabilizer" are shelf stable or "compatible" when in intimate contact with the sulfur-containing amino acids. Some examples of "compatibles" are edible fats and oils, including but not limited to hardstock emulsifiers and ethyl cellulose fat emulsions, starches, soy protein isolate and gum arabic.
It was surprisingly discovered that soy isolate is a shelf-stable compatible material, while certain soy concentrates are "incompatibles" because they apparently contain a "destabilizer".
As used herein, the term "sulfur-containing amino acid" is intended to cover all of those acids including their salts and esters. Preferred acids including their salts and/or esters are: N-acyl L-methionine, N-acyl cystine, N-acyl cysteine and mixtures thereof. These preferred acids are disclosed in the two Damico et al. patents, supra. A most preferred class of amino acid material is a "cocrystallate" comprising an edible salt of said preferred sulfur-containing amino acid and an effective amount of a water-soluble edible cocrystallizer effective amount of a water soluble edible cocrystallizer material; wherein the N-acyl substituent is derived from a fatty acid having from 1 to 24 carbon atoms, and wherein said edible salt is selected from edible alkali and alkaline earth metals, and wherein said cocrystallizer material is selected from alkali and alkaline earth metal salts of halides, phosphates and nitrates, suitable organic acids and their salts, crystalline starches, suitable polyhydric alcohols, crystalline cellulose, crystalline sugars, flavorous mixtures such as hydrolyzed vegetable proteins, hydrolyzed yeast extracts and meat flavors.

The preferred amino acid cocrystallates are prepared by dissolving at least one amino acid material in water along with an effective amount of at least one edible cocrystallizer material. Then the solution is preferably neutralized to form a salt of the amino acid. Generally, an effective amount of cocrystallizer material will be such that the ratio by weight of the amount of cocrystallizer to the amount of edible amino acid salt is from about 0.9:1 to about 6:1. Equal amounts of amino acid and cocrystallizer appear to work best. Of course, the solution is neutralized with an appropriate edible base like NaOH, Ca(OH)$_2$, KOH, or the like. The final pH range of the solution can be from 5 to 10 and more preferably from 6 to 8.

The mixture of amino acid salt and cocrystallizer material is then dried using an appropriate technique. Freeze drying is preferred.
Sodium chloride, although somewhat hygroscopic itself, is surprisingly a more preferred cocrystallizer material. Monosodium glutamate, tartaric acid, sodium tartrate, sodium valerate and suitable vegetable gums can also be used as cocrystallizer material. Other specific cocrystallizer materials contemplated by this disclosure include sugars, and any like edible material which allows the successful dehydration of the amino acid material to provide a stable dehydrated solid sulfur-containing amino acid material.
Dry proteinaceous foodstuff materials contemplated by this invention include, among the oil seeds: peanut, cottonseed, soybean, safflower, sesame, sunflower, rapeseed and flax meal (linseed meal); among the milk protein products: casein, non-fat milk solids, or whey protein; among the cereal grains: whey (gluten), wheat, corn, barley, oats, rice, rye, wheat bran, and wheat germ; among the plant proteins: leaf

3

(e.g. alfalfa) and coconut; among the single-cell proteins: yeast, and petroleum, methane and carbohydrate feeding microbes; among the animal proteins: collagen (gelatin), keratin, offal, and silk waste.

Also contemplated by this invention are manufactured proteinaceous foodstuffs formulated in part from selected proteins from the above representative enumeration. In this respect it is understood that the proteinaceous source material may be fortified directly and thereby provide a nutritionally balanced proteinaceous foodstuff useful either alone or in combination with other ingredients as a manufactured foodstuff; or fortification maybe be effected during formulation of the manufactured proteinaceous foodstuff.

Knowing the composition of the proteinaceous foodstuff which it is desired to supplement with the amino acid food additive described herein, and the level to which it is desired to supplement the foodstuff, a person of ordinary skill in the art will have no difficulty in determining how much of a particular shelf-stable sulfur-containing amino acid material should be used. In general, it will be found that an amount such as from about 0.1% to about 5% by weight of the protein level of the food to be supplemented will be satisfactory. A preferred range is from about 0.5% to about 2-1/2% by weight of the protein in the foodstuff. Amounts outside these ranges can, however, be used if the desired supplementation can thereby be achieved.

The examples herein of stabilized sulfur-containing amino acid additives and/or stabilized proteinaceous foodstuffs fortified with sulfur-containing amino acids are given to indicate and highlight preferred products contemplated in the instant invention. Some of the following examples were subjected to a Rapid Aging Test.

Description of rapid aging test
1. A sample is placed in a headspace flask and the flask sealed.
2. The sealed flask is placed in an oil bath maintained at 90°C for 16 hours.
3. The flask is cooled to room temperature, 30 ml. of water added and the flask placed in an oil bath maintained at 45°C for 15 minutes.
4. The headspace was analyzed using a modified version of the procedure described by von Sydow, E., Anderson, J., Anjou, K., Karlsson, G., Land, D. and Griffiths, N., Lebensm., Wiss. u. Technol., Vol. 3 (1970), 11—12. The headspace sample was transferred from the headspace flask to the cold trap by passing nitrogen over the sample contained in the flask at a flow rate of 50 ml/min. The sweep time was varied depending on the size of the sample desired for analysis and is defined for each table.

Example 1
Sodium NALM, NaCl cocrystallate suspended in melted fat and applied to the surface of extrudate
Two grams of NaCl and 0.5 g of N-acetyl L-methionine (NALM) were dissolved in 30 ml of water and the pH of the solution brought to 6.75 by the addition of 0.1 N NaOH. The resulting solution was freeze dried. Eight-tenths of a gram of the resulting freeze-dried cocrystallate was added to 4 g of melted fat in a test tube immersed in a silicone bath maintained at 80°C. A fine stream of nitrogen was bubbled through the melted fat in order to suspend the sodium NALM-NaCl cocrystallate.

One and two-tenths grams of the suspension were applied to the surface of 3.75 g of freeze-dried soy based meat analog extrudate using a transfer pipet. The resulting sample was used in the rapid aging test and proved to be a shelf stable sulfur-containing fortified foodstuff. See Table I, Sample 1.

Example 2
NALM, melted fat, applied to the surface of extrudate
Three hundred and thirty-nine mg of finely ground NALM were added to 10 g of melted fat mix in a test tube immersed in a silicone oil bath maintained at 65°C. Suspension of the NALM was achieved by bubbling a fine stream of nitrogen through the melted fat. One and three-tenths grams of the suspension were applied to the surface of 3.75 g of freeze-dried soy based meat analog extrudate using a transfer pipet. The resulting sample was subjected to the rapid aging test. This sample showed improved shelf stability over similar prior art amino acid fortified foodstuffs. See Table I, Sample 2.

The rapid aging test results of the products of Examples 3—5, 7 and 8 illustrate what kind of things happen when an unstabilized sulfur-containing amino acid material is intimately mixed with a destabilizer-containing foodstuff material.

Example 3
Aqueous NALM, extrudate (freeze-dried)
NALM (0.113 g) was dissolved in 30 ml of water and the solution added to 15 g of soy based meat analog extrudate (containing 25% water) contained in a plastic dish. The extrudate was stirred until nearly all of the solution was absorbed and then freeze-dried. The freeze-dried sample was ground with a mortar and pestle and 3.75 g were subjected to the rapid aging test. The results showed incompatibility. See Table I, Sample 3.

Example 4
Aqueous sodium NALM, extrudate (freeze-dried)
NALM (0.113 g) was dissolved in 15 ml of water and the pH of the solution brought to 6.75 by the addition of 0.1 N sodium hydroxide solution. The solution was diluted to 30 ml and added to 15 g of soy based meat analog extrudate (containing 25% $H_2O$). The extrudate was stirred until nearly all of the solution was absorbed. After freeze drying, the sample was ground with a mortar and pestle, and 3.9 g of the ground sample was used in the rapid aging test. See Table I, Sample 4.

Example 5
Aqueous sodium NALM, NaCl, extrudate (freeze-dried)
One hundred and thirteen mg of NALM and 0.4 g of NaCl were dissolved in 15 ml of water. The pH of the solution was brought to 6.75 by the addition of 0.1 N sodium hydroxide, diluted to 30 ml and added to 15 g of soy based meat analog extrudate (containing 25% water). The extrudate was stirred until nearly all of the solution was absorbed, then freeze dried. The freeze-dried sample was ground with a mortar and pestle and a 3.9 g of the ground sample was used in the rapid aging test. See Table I, Sample 5.

Example 6
Sodium NALM-NaCl (cocrystallate) extrudate (dry ingredients ground together)
Three and seventy-five hundredths g of freeze-dried soy based meat analog extrudate and 0.193 g of a freeze-dried mixture of sodium NALM and NaCl (1:4-sodium NALM:NaCl) were ground together in a mortar and pestle. The test results shown in Table I, Sample 6, show an improved shelf-stable fortified foodstuff.

Example 7
NALM, extrudate (dry ingredients ground together)
Thirty-eight mg of NALM and 3.75 g of freeze-dried extrudate were ground together with a mortar and pestle. The resulting sample was used in the rapid aging test. See Table I, Sample 7.

Example 8
Peanut butter+NALM
Fifteen g of peanut butter were heated at 90°C, 38 mg of NALM added, the mixture stirred with a magnetic stirrer and subjected to the rapid aging test. See Table I, Sample 8.

Example 9
Peanut butter+sodium NALM-NaCl (cocrystallate)
The experiment described in 8 above was repeated substituting 0.199 g of a sodium NALM-NaCl mixture (1—4 ratio) for the NALM. The test results shown in Table I for Sample 9 illustrate an improved shelf-stable fortified foodstuff relative to Sample 8.

TABLE I
Generation of volatile sulfur compounds in the rapid aging test (90°C, 16 hours)

| Samples subjected to rapid aging test | Volatile sulfur compounds formed[*] in headspace | | | |
|---|---|---|---|---|
| | Hydrogen sulfide | Methyl mercaptan | Dimethyl sulfide | Dimethyl disulfide |
| | Peak area measurements (sulfur detector response $\times 10^3$) | | | |
| 1 Sodium NALM, NaCl cocrystallate, melted fat, applied to the surface of extrudate | 0 | 0 | 2 | 0 |
| 2 NALM, melted fat, applied to the surface of extrudate | 21 | 1 | 105 | 81 |
| 3 Aqueous solution of NALM, added to extrudate, then freeze-dried | 0 | 0 | 285 | 1 |
| 4 Aqueous solution of sodium NALM added to extrudate then freeze-dried | 11 | 0 | 584 | 45 |
| 5 Aqueous solution of sodium NALM, NaCl, added to extrudate, then freeze-dried | 35 | 0 | 850 | 25 |
| 6 Sodium NALM-NaCl (cocrystallate) extrudate (dry ingredients ground together) | 14 | 4 | 33 | 33 |
| 7 NALM, extrudate (dry ingredients ground together) | 0 | 75 | 143 | 824 |
| 8 Peanut butter+NALM | 247 | 427 | 410 | 5 |
| 9 Peanut butter+sodium NALM-NaCl (cocrystallate) | 0 | 17 | 150 | 0 |

[*]A sweep time of 5 minutes (50 ml $N_2$/minute) was used to collect the headspace for analysis.

Sodium NALM-NaCl cocrystallate suspended in melted fat and applied to the surface of dry extrudate is stable in a rapid aging test (Table I, Sample 1). The stability of NALM suspended in melted fat is also improved (Sample 2). The superior stability of the low hygroscopic Na-NALM-NaCl cocrystallate-melted fat applied to dry meat-analog extrudate as compared to comparable amounts of an aqueous NALM additive applied to meat analog alone or in a melted fat, is demonstrated by these data. The fat coated sodium chloride-sodium salt of NALM cocrystallate is therefore most preferred (Sample 1 vs. Samples 3, 4, 5).

Decomposition is pronounced when aqueous solutions of NALM, sodium NALM, or sodium NALM plus NaCl are intimately mixed with extrudate, freeze dried and subjected to the rapid aging test (Table I, Samples 3, 4 and 5).

Although some decomposition occurs when a sodium NALM-NaCl cocrystallate is dry mixed (ground) with extrudate and subjected to the rapid aging test, this composition is much more stable than a dry mix of free NALM-extrudate mixture. However, the difference in the quantity of volatile sulfur compounds may be due in part to a difference in the degree to which the two samples were ground.

Decomposition is pronounced when a peanut butter composition containing NALM is subjected to a rapid aging test. Considerably less decomposition occurs when the same peanut butter composition containing sodium NALM-NaCl cocrystallate is used (Table I, Samples 8 and 9, respectively). Peanut butter apparently contains some destabilizers which are manifested under the rapid aging test conditions described below.

Examples 10—16 and Table II show procedure and data, respectively, which further demonstrate the significance of the present invention in the context of a stabilized encapsulated sulfur-containing amino acid mix with a soy protein based meat analog extrudate.

Examples 10, 11, 12, 13, 14 and 15 relate to encapsulated NALM. The material used in these examples comprise 18.06% of an amino acid blend and 81.94% of the encapsulating material. The amino acid blend consisted of 53 parts L-lysine hydrochloride, 28 parts NALM and 19 parts L-threonine. These materials were made by mixing the amino acids in an aqueous solution and spray drying. The material was spray dried

6

using an air inlet temperature of 310°F (154°C), a nozzle type 28—60, and a pressure of 2500 psi (17237.5 kPa).

Example 10
NALM encapsulated in starch
Seventy-five hundredths (0.75) of a gram of a commercially encapsulated NALM was subjected to the rapid aging test. Starch was the encapsulating agent and NALM comprised 5% of the encapsulated material. See Table II, Sample 10.

Example 11
NALM encapsulated in starch mixed with ground, freeze-dried extrudate
Three and seventy-five hundredths (3.75) grams of freeze-dried soy based meat analog extrudate were ground with a motar and pestle. The sample was transferred to a screw-capped vial, 0.75 g. of starch encapsulated NALM added and the vial shaken until the sample was thoroughly mixed. The sample was then subjected to the rapid aging test. No dimethyl sulfide was detected in the headspace upon analysis. See Table II, Sample 11.

Example 12
NALM encapsulated in starch and mixed with freeze-dried extrudate coated with fat
Three and seventy-five hundredths (3.75) grams of freeze-dried soy based meat analog extrudate were ground with a mortar and pestle and then transferred to a small screw-capped bottle. One gram of a melted, partially hydrogenated vegetable oil was added and the vial shaken until the sample was thoroughly mixed. Seventy-five hundredths gram of starch encapsulated NALM was added and the sample again shaken until thoroughly mixed. The sample was then subjected to the rapid aging test. The excellent results are shown in Table II, Sample 12. Only $0.4 \times 10^3$. units of dimethyl sulfide were measured on the Sulfur Detector.

Example 13
NALM encapsulated in gum arabic
Same as Example 10 but with gum arabic instead of starch as the encapsulating agent. Only $12 \times 10^3$ detector units of dimethyl sulfide were measured. See Table II, Sample 13.

Example 14
NALM encapsulated in gum arabic and mixed with ground, freeze-dried extrudate
Same as in Example 11 but with NALM encapsulated in gum arabic rather than starch. See Table II, Sample 14.

Example 15
NALM encapsulated in gum arabic and mixed with ground, freeze-dried extrudate coated with fat
Same as Example 12 but using NALM encapsulated in gum arabic rather than in starch. See Table II, Sample 15.

Example 16
NALM mixed with ground, freeze-dried extrudate coated with fat
Three and seventy-five hundredths (3.75) grams of freeze-dried soy based meat analog extrudate were ground with a mortar and pestle and then transferred to a small, screw-capped bottle. One gram of a melted, partially hydrogenated vegetable oil was added and the vial shaken until the sample was thoroughly mixed. Thirty-eight milligrams (38) of NALM were added and the sample again shaken until thoroughly mixed. The sample was then subjected to the rapid aging test.
The results show that coating the meat analog extrudate with the oil was not sufficiently effective to protect the NALM from partial decomposition. (Table II, Sample 16)

TABLE II
Generation of volatile sulfur compounds in the rapid aging test (90°C., 16 hours)

| Samples subjected to rapid aging test* | Volatile sulfur compounds formed in headspace |
| --- | --- |
| | Dimethyl sulfide |
| | Peak area measurements (sulfur detector response$\times 10^3$) |
| 10 NALM encapsulated in starch | 0 |
| 11 NALM encapsulated in starch mixed with ground freeze-dried extrudate | 0 |
| 12 NALM encapsulated in starch and mixed with freeze-dried extrudate coated with fat | 0.4 |
| 13 NALM encapsulated in gum arabic | 12 |
| 14 NALM encapsulated in gum arabic and mixed with ground, freeze-dried extrudate | 0.4 |
| 15 NALM encapsulated in gum arabic and mixed with ground, freeze-dried extrudate coated with fat | 3 |
| 16 NALM mixed with ground, freeze-dried extrudate coated with fat | 114 |

*A sweep time of 5 minutes (50 ml of $N_2$/minute) was used to collect the headspace for analysis.

Example 17
Tristearin added to freeze-dried extrudate containing NALM

NALM (0.113 g) was dissolved in 30 ml of water and the solution added to 11.25 g of dry soy based meat analog extrudate contained in a plastic dish. The extrudate was stirred until nearly all of the solution was absorbed and then freeze-dried. Three grams of melted tristearin were applied to the surface of the freeze-dried extrudate. The sample was then subjected to a rapid aging test at 60°C. See Table III, Sample 17.

Example 18
NALM suspended in tristearin and added to freeze-dried extrudate

Three hundred and thirty-nine (339) mg. of finely ground NALM were added to 9 g. of melted tristearin in a test tube immersed in a silicone oil bath maintained at 90°C. Suspension of the NALM was achieved by bubbling a fine stream of nitrogen through the melted tristearin. Three and one-tenth (3.1) grams of the suspension were dripped on the surface of 11.25 g. of freeze-dried soy based meat analog extrudate using a transfer pipet. The resulting sample was subjected to a rapid aging test at 60°C. See Table III, Sample 18.

This is a preferred embodiment of the present invention.

Example 18 demonstrates the stabilizing effect of coating NALM with tristearin prior to mixing with soy protein based meat analog extrudate granules.

# 0 030 448

## TABLE III
### Generation of volatile sulfur compounds in the rapid aging test (60°C, 16 hours)

| Samples subjected to rapid aging test[*] | Volatile sulfur compounds formed in headspace |
|---|---|
| | Dimethyl sulfide |
| | Peak area measurements (sulfur detector response $\times 10^3$) |
| 17 Tristearin added to freeze-dried extrudate containing NALM | 159 |
| 18 NALM suspended in tristearin and added to freeze-dried extrudate | 0 |

[*] A sweep time of 15 minutes (50 ml of $N_2$/minute) was used to collect the headspace for analysis. Each sample contained 113 mg of NALM.

Example 19
Crystalline NALM
One hundred and thirteen (113) milligrams of NALM were subjected to the rapid aging test. The results (Table IV, Sample 19) show that crystalline NALM itself is shelf stable.

Example 20
Meat analog granules (with 0.75% NALM)
Eleven and twenty-five hundredths (11.25) grams of a dry soy based meat analog containing 0.75% free NALM (dry basis) were subjected to a rapid aging test. A substantial amount of dimethyl sulfide ($780 \times 10^3$ detector units) was generated. See Table IV, Sample 20.

Example 21
Meat analog extrudate
Eleven and twenty-five hundredths (11.25) grams of a dry soy based meat analog extrudate were subjected to a rapid aging test (Sample 21, Table IV). Compared with the product of Example 20 (Sample 20 in Table IV), very little dimethyl sulfide is generated from this analog sample.

Example 22
Meat analog extrudate+NALM
Same as Example 3 but used 11.25 g. of dry sample in test rather than 3.75 g. See Table IV, Sample 22.

Example 23
Promosoy® 100 (soy concentrate)
Fifteen grams of Promosoy® 100, a soy concentrate, were mixed with 50 ml. of water and freeze-dried. The freeze-dried sample was then subjected to the rapid aging test. This sample, Promosoy® 100, comprises about 60—70% protein. Very little dimethyl sulfide was detected. (Table IV, Sample 23).

Example 24
Promosoy® 100+NALM
One hundred and thirteen (113) milligrams of NALM were dissolved in 50 ml. of water and added to 15 g. of Promosoy® 100. After thorough mixing the sample was freeze-dried. The freeze-dried sample was subjected to the rapid aging test. A substantial amount of dimethyl sulfide was generated ($1000 \times 10^3$ detector units).

Example 25
Supro 620T® (soy isolate+NALM)
One hundred and thirteen (113) milligrams of NALM were dissolved in 40 ml. of water. The solution was added to 8 g. of Supro 620T® (a commercially available soy isolate), mixed well and freeze-dried. Two and sixty-seven hundredths (2.67) g. of the freeze-dried material was subjected to the rapid aging test. Almost no dimethyl sulfide was detected. (Table IV, Sample 25).

Example 26
Protein rich soy concentrate
Thirty-three and seventy-five hundredths (33.75) grams of a protein-rich soy concentrate containing 87% protein were thoroughly wet with 90 ml. of water containing 0.339 g. of NALM. The sample was freeze-dried. Eleven and twenty-five hundredths (11.25) grams of the freeze-dried sample was subjected to the rapid aging test. Very little dimethyl sulfide was detected. (Table IV, Sample 26).

9

Example 27

Carbohydrate rich soy protein

Four and one-half grams of a fat-free soy protein fraction containing 41% protein and rich in carbohydrates were thoroughly wet with 10 ml. of water containing 0.226 g. of NALM and then freeze-dried. Eight-tenths of a gram of the freeze-dried sample was subjected to the rapid aging test. Unlike Samples 25 and 26, which were made with soy isolate and protein rich soy concentrate, significant amounts of dimethyl sulfide were detected. (Table IV, Sample 27)

Example 28

Soy based meat analog granules stored at 100°F (38°C) for 3 months (0.75% NALM)

An aqueous solution of NALM was added to a soy based meat analog and the resulting mix was air dried in a hot air dryer. The analog, containing 0.75% NALM (dry basis), was stored in a sealed pouch at 100°F (38°C) for three months. Fifteen grams of sample were transferred to a headspace flask, 30 ml. of water added and the headspace analyzed. Substantial amounts of dimethyl sulfide were detected in the headspace (Table IV, Sample 28). Substantial off-flavor was also detected in the aged samples. The character of the off flavor was similar to that of dimethyl sulfide.

TABLE IV
Generation of volatile sulfur compounds in the rapid aging test (90°C, 16 hours)

| Samples subjected to rapid aging test* | Volatile sulfur compounds formed in headspace |
| --- | --- |
| | Dimethyl sulfide |
| | Peak area measurements (sulfur detector response×10³) |
| 19 Crystalline NALM | 0 |
| 20 Meat analog granules (with 0.75% NALM) | 780 |
| 21 Meat analog extrudate | 34 |
| 22 Meat analog extrudate+NALM | 1,700 |
| 23 Promosoy® 100 (soy concentrate) | 3 |
| 24 Promosoy® 100+NALM | 1,000 |
| 25 Supro® 620T (soy isolate)+NALM | 1 |
| 26 Protein rich soy concentrate (87% protein) | 4 |
| 27 Carbohydrate rich soy concentrate (41% protein) | 500 |
| 28 Soy based meat analog stored at 100°F for 3 months (contained 0.75% NALM)** | 1,300 |

* A sweep time of 15 minutes (50 ml. of N₂/min.) was used to collect the headspace for analysis in Examples 19, 24 and 28. A sweep time of 5 minutes was used in Examples 25—27.
** Data included for comparison purposes.

Examples 25 and 26, which correspond to Samples 25 and 26 in Table IV, further highlight the stabilizing benefits of the selective treatment mixing of a sulfur-containing amino acid (NALM) with foodstuffs which do not contain a "destabilizer".

Separation of the NALM from the extrudate may also be accomplished by adding the NALM to the extrudate as a stabilized gel. Such a stabilized fat composition may be formed in the following manner:

Example 29

70—90 parts of liquid soybean oil (i.v. 107) is added to 10 parts ethyl cellulose having about 2.58 ethoxyl groups/glucose unit and a viscosity designation of 45 cps (45 mPas). The resulting mixture is heated with stirring at a temperature of 200°C until the ethyl cellulose is completely dispersed. The mixture is then allowed to cool to 80°C, 10 parts of finely ground NALM added and the mixture stirred and cooled to room temperature (25°C). On cooling, a stabilized fat gel is formed. The stabilized fat gel is chopped into

10

pieces having a particle size of from about 2 to 10 mm. An appropriate amount of this material is then mixed with the analog.

Example 30

A further method of preventing interaction of NALM with a meat analog is to use it in a water-insoluble form, e.g. as the calcium salt. Thus, 371 mg. of the calcium salt of NALM is suspended in 45 ml of water and added to 15 g of meat analog extrudate. The extrudate is stirred until nearly all of the water is absorbed. The product is then freeze dried.

Example 31

Another method of preventing interaction of NALM with an analog product is to add it to the analog as a water in oil emulsion. This can be done as follows:

(a) Twenty-five g of vegetable oil, 2.5 g of hardstock and 22.5 g of hardened coconut oil is mixed and heated at 150°F (66°C) until a clear solution results;

(b) Dissolve 0.75 g of sodium alginate and 7.5 g of NALM in 42 ml of water; shear mixing and heat (110°F 43°C) can be used to speed solution;

(c) Cool the oil phase to its cloud point;

(d) Add the aqueous phase to the oil phase gradually while mixing at moderate to high shear rates and while cooling the oil phase;

(e) After complete addition of the aqueous phase, continue mixing and cooling until a plastic mass forms (at approximately 80°F 27°C).

An appropriate quantity of this plastic fat can then be mixed with dry analog granules.

## Claims

1. A method of making a storage-stable sulfur-containing amino acid fortified foodstuff by forming an intimate mixture of:

a) a sulfur-containing amino acid selected from N-acyl L-methionine, N-acyl L-cystine, N-acyl L-cysteine and the salts and esters thereof, wherein the acyl group is derived from fatty acids having from 1 to 24 carbon atoms, and the ester group is derived from fatty alcohols having from 1 to 22 carbon atoms, and

b) a sulfur-containing amino acid-compatible material selected from an edible triglyceride, a starch, a fat-ethyl cellulose gel, a protein-rich material, and gum arabic, characterized in that the intimate mixture comprises a sulfur-containing amino acid encapsulated either with a starch or gum arabic.

2. A method according to Claim 1 characterized in that the sulfur-containing amino acid is contained and protected in said mixture by said sulfur-containing amino acid-compatible material, and wherein said mixture is then mixed with meat analog particles containing a destabilizer component.

## Patentansprüche

1. Verfahren zur Herstellung eines lagerstabilen, mit schwefelhaltiger Aminosäure angereicherten Nahrungsmittels durch Herstellen eines innigen Gemischs aus:

a) einer schwefelhaltigen Aminosäure ausgewählt aus N-Acyl-L-methionin, N-Acyl-L-cystin, N-Acyl-L-cystein und den Salzen und Estern davon, worin die Acylgruppe von Fettsäuren mit 1 bis 24 C-Atomen stammt und die Estergruppe von Fettalkoholen mit 1 bis 22 C-Atomen stammt und

b) einem Material, das mit der schwefelsäurehaltigen Aminosäure verträglich ist, ausgewählt aus einem eßbaren Triglycerid, einer Stärke, einem Fettethylcellulosegel, einem eiweißreichen Material und Gummi arabicum, dadurch gekennzeichnet, daß das innige Gemisch eine schwefelhaltige Aminosäure enthält, die entweder mit einer Stärke oder einem Gummi arabicum eingekapselt ist.

2. Verfahren nach Anspruch 1, dadurch gekennzeichnet, daß die schwefelhaltige Aminosäure in dem Gemisch enthalten ist und geschützt wird durch das mit der schwefelsäurehaltigen Aminosäure verträgliche Material und worin das Gemisch dann mit fleisch-analogen Teilchen, die eine Entstabilisierungskomponente enthalten, gemischt wird.

## Revendications

1. Procédé de préparation d'un aliment stable à la conservation, complémenté par un aminoacide contenant du soufre par mélange intime de

a) un aminoacide soufré choisi parmi la N-acyl L-méthionine, la N-acyl L-cystine, la N-acyl L-cystéine et leurs sels et esters dans lesquels le groupe acyle dérive d'acides gras ayant 1 à 24 atomes de carbone, et le groupe ester dérive d'alcools gras ayant 1 à 22 atomes de carbone, et

b) d'un produit compatible avec les aminoacides soufrés choisi parmi les triglycérides comestibles, les amidons, les gels de cellulose et graisse éthylée, les produits riches en protéines et la gomme arabique, caractérisé en ce que le mélange intime comporte un aminoacide soufré encapsulé soit avec de l'amidon soit avec de la gomme arabique.

**0 030 448**

2. Procédé selon la revendication 1, caractérisé en ce que l'aminoacide soufré est inclus et protégé dans ce mélange par ce produit compatible avec l'aminoacide soufré et en ce que ce mélange est alors mélangé avec des particules similaires à la viande contenant un élément déstabilisant.